# EUROPEAN PATENT APPLICATION

(11) **EP 4 539 307 A1**
(43) Date of publication of application: **16.04.2025**
(21) Application number: 23819494.8
(22) Date of filing: 14.04.2023
(51) Int. Cl.: H02K 7/10, F16H 49/00

(54) **MAGNETIC-GEARED MOTOR AND MAGNETIC GEAR**

(30) Priority: 08.06.2022 JP 2022093315
(71) Applicant: Panasonic Intellectual Property Management Co., Ltd., Kadoma-shi, Osaka 571-0057 (JP)
(72) Inventor: TAKAHARA, Kazuaki, Osaka 571-0057 (JP); MATSUSHITA, Yasuaki, Osaka 571-0057 (JP); MORIMOTO, Eiki, Osaka 571-0057 (JP)
(74) Representative: SSM Sandmair
(86) International application number: PCT/JP2023/015229
(87) International publication number: WO 2023/238507

(57) **Abstract**

To provide a magnetic-geared motor and a magnetic gear that can realize cost reduction. Magnetic-geared motor (1) includes stator (10), first rotating body (20), second rotating body (30), support shaft (222), and second bearing (52). First rotating body (20) includes first rotor (21) having a tubular shape and first rotating shaft (22) having axial center (A1) as a rotation center. Second rotating body (30) includes second rotor (31) disposed between first rotor (21) and first rotating shaft (22). Support shaft (222) is disposed toward the axial center of first rotating shaft (22) as viewed from second rotor (31). Second bearing (52) is disposed between support shaft (222) and second rotor (31).

## Description

### TECHNICAL FIELD

The present disclosure relates to a magnetic-geared motor and a magnetic gear.

### BACKGROUND ART

A magnetic-geared motor is a motor that utilizes a magnetic gear using a harmonic magnetic flux, and includes a stator, a high-speed rotor, and a low-speed rotor (for example, see PTL 1). The magnetic-geared motor generates a harmonic magnetic flux by rotating the high-speed rotor by magnetomotive force of the stator. This enables the low-speed rotor having an output shaft to be rotated at a predetermined gear ratio (reduction ratio).

### Citation List

### Patent Literature

PTL 1: Japanese Patent No. 5350438

### SUMMARY OF THE INVENTION

In a conventional magnetic-geared motor, a bearing that supports each rotor is disposed on the outer side of the rotor. Therefore, the overall structure of the magnetic-geared motor is increased in size, or the bearing is increased in diameter to cause the cost to increase.

The present disclosure has been made in view of the above point, and an object of the present disclosure is to provide a magnetic-geared motor and a magnetic gear that can realize cost reduction.

A magnetic-geared motor according to one aspect of the present disclosure includes a stator, a first rotating body, a second rotating body, a support shaft, and a bearing. The first rotating body includes a first rotor having a tubular shape and a rotating shaft having an axial center as a rotation center. The second rotating body includes a second rotor disposed between the first rotor and the axial center of the rotating shaft. The support shaft is disposed toward the axial center of the rotating shaft as viewed from the second rotor. The bearing is disposed between the support shaft and the second rotor.

A magnetic gear according to one aspect of the present disclosure includes a stator, a first rotating body, a second rotating body, a support shaft, and a bearing. The first rotating body includes a first rotor having a tubular shape and a rotating shaft having an axial center as a rotation center. The second rotating body includes a second rotor disposed between the first rotor and the axial center of the rotating shaft. The support shaft is disposed toward the axial center of the rotating shaft as viewed from the second rotor. The bearing is disposed between the support shaft and the second rotor.

According to the magnetic-geared motor and the magnetic gear according to one aspect of the present disclosure, cost reduction can be realized.

### BRIEF DESCRIPTION OF THE DRAWINGS

Fig. 1 is a perspective view of a magnetic-geared motor according to a first exemplary embodiment.
Fig. 2 is a longitudinal cross-sectional view of the magnetic-geared motor of the above.
Fig. 3 is a schematic cross-sectional view of the magnetic-geared motor of the above.
Fig. 4 is a schematic cross-sectional view of a magnetic-geared motor according to a second exemplary embodiment.
Fig. 5 is a schematic cross-sectional view of a magnetic-geared motor according to a third exemplary embodiment.
Fig. 6 is a schematic cross-sectional view of a magnetic-geared motor according to a fourth exemplary embodiment.
Fig. 7 is a schematic cross-sectional view of a magnetic-geared motor according to a fifth exemplary embodiment.
Fig. 8 is a schematic cross-sectional view of a magnetic-geared motor according to a sixth exemplary embodiment.
Fig. 9 is a schematic cross-sectional view of a magnetic-geared motor according to a seventh exemplary embodiment.
Fig. 10 is a schematic cross-sectional view of a magnetic-geared motor according to an eighth exemplary embodiment.
Fig. 11 is a schematic cross-sectional view of a magnetic-geared motor according to a ninth exemplary embodiment.
Fig. 12 is a schematic cross-sectional view of a magnetic gear according to a tenth exemplary embodiment.

### DESCRIPTION OF EMBODIMENTS

### (Exemplary embodiments)

Hereinafter, a magnetic-geared motor and a magnetic gear according to exemplary embodiments of the present disclosure will be described in detail with reference to the drawings. However, the drawings described in the following exemplary embodiments are merely schematic views, and ratios in size and thickness of components do not always reflect actual dimensional ratios. Note that, the configurations described in the following exemplary embodiments are merely examples of the present disclosure. The present disclosure is not limited to the following exemplary embodiments, and various modifications can be made depending on design and the like as long as effects of the present disclosure can be achieved.

### (First exemplary embodiment)

### (1) Overall configuration of magnetic-geared motor

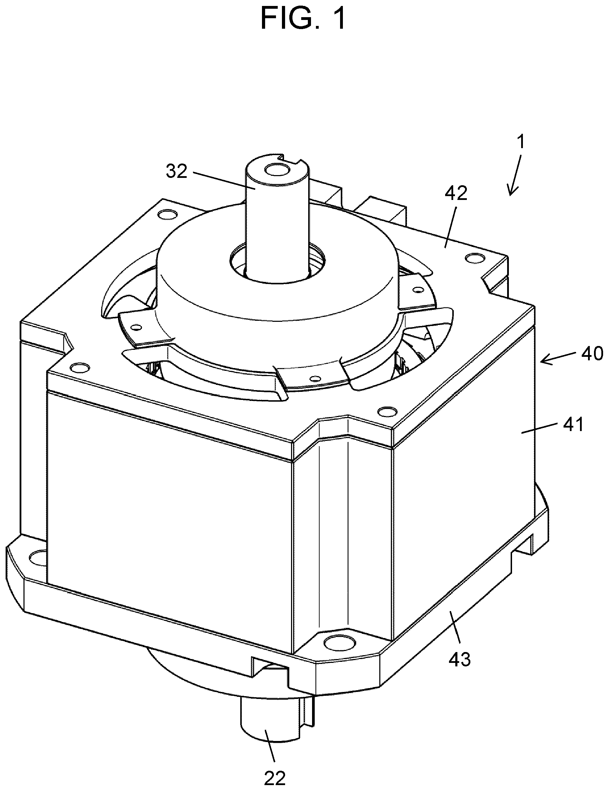

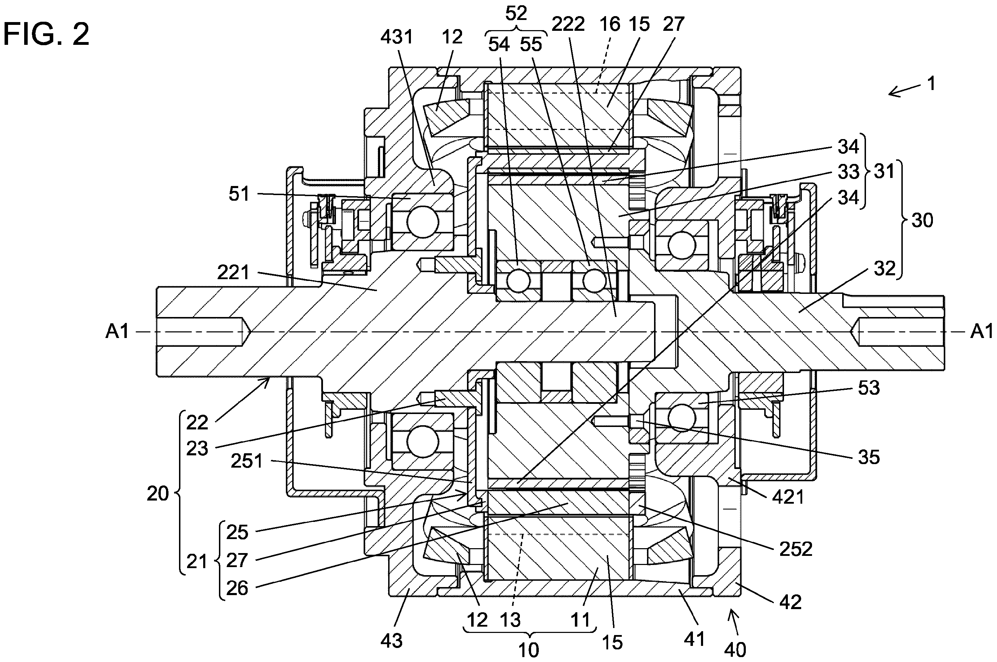

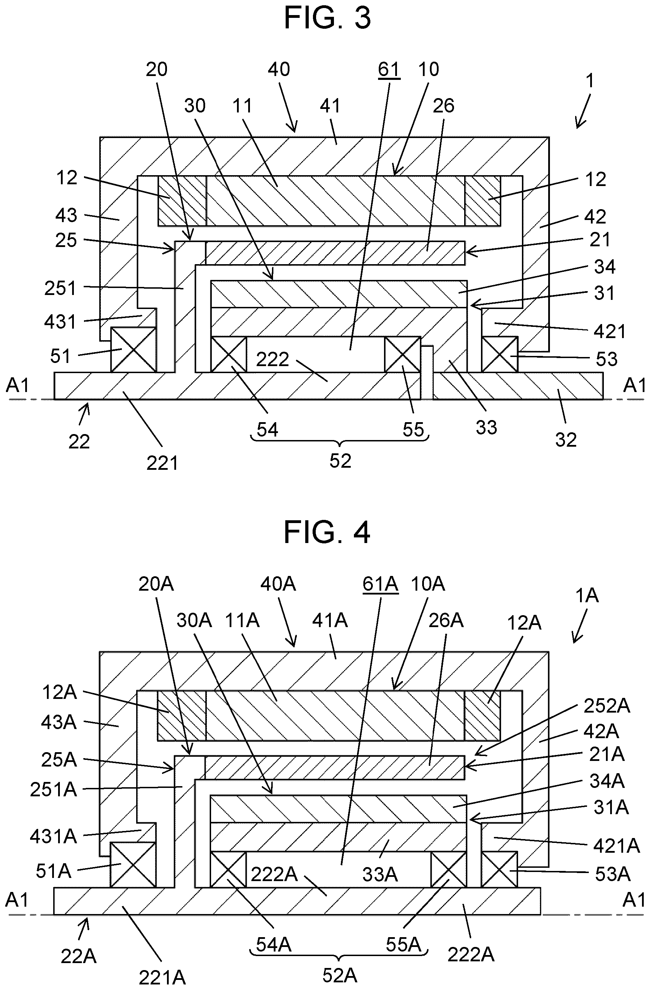

Magnetic-geared motor 1 according to a first exemplary embodiment will be described with reference to Figs. 1 to 3. Fig. 1 is a perspective view of magnetic-geared motor 1 according to the first exemplary embodiment. Fig. 2 is a longitudinal cross-sectional view of magnetic-geared motor 1 of the above. Fig. 3 is a schematic cross-sectional view of magnetic-geared motor 1 of the above. Magnetic-geared motor 1 is a permanent magnet synchronous motor and is driven by an inverter. Magnetic-geared motor 1 includes stator 10, first rotating body 20, and second rotating body 30.

Magnetic-geared motor 1 further includes housing 40, first bearing 51, second bearing 52, and third bearing 53. Housing 40 is a case for housing stator 10, first rotating body 20, and second rotating body 30, and constitutes an outer shell of magnetic-geared motor 1. First bearing 51, second bearing 52, and third bearing 53 are ball bearings.

Magnetic-geared motor 1 is an inner rotor type motor in which first rotating body 20 and second rotating body 30 are disposed on the radially inner side of stator 10. That is, stator 10 is disposed so as to surround first rotating body 20 and second rotating body 30. Note that the "radial direction" is defined as, in a plane having a straight line coinciding with the axial center of first rotating shaft 22 (described later) of first rotating body 20 is set as a normal line, a direction in which a straight line extends, the straight line connecting a point corresponding to the axial center of first rotating shaft 22 and a point passing through this point, perpendicular to the axial center of first rotating shaft 22, and separated from first rotating shaft 22. Further, the "radially inner side" is defined as a direction from a certain point away from first rotating shaft 22 toward the axial center of first rotating shaft 22. The "radially outer side" is defined as a direction from a certain point away from first rotating shaft 22 toward a direction opposite to the axial center of first rotating shaft 22.

Stator 10, first rotating body 20, and second rotating body 30 are coaxially disposed. That is, the center of stator 10, the axial center of first rotating shaft 22 of first rotating body 20, and the axial center of second rotating shaft 32 of second rotating body 30 coincide with each other, and are illustrated as axial center A1 in Figs. 2 and 3. Therefore, the rotation center of first rotating body 20 and second rotating body 30 coincide with each other.

### (2) Stator

Stator 10 generates magnetic force acting on first rotating body 20 and second rotating body 30. Specifically, stator 10 is configured such that N poles and S poles alternately appear along the circumferential direction on an air gap surface facing second rotating body 30. Note that the "circumferential direction" is defined as a direction along the circumference of a circle centered on a point corresponding to axial center A1 of first rotating shaft 22, in a plane having a straight line coinciding with axial center A1 of first rotating shaft 22 of first rotating body 20 as a normal line.

Stator 10 in the present exemplary embodiment includes stator core 11 having a plurality of teeth 15 and yoke 16, a plurality of coils 12 wound around the plurality of teeth 15, and a plurality of permanent magnets 13. Stator core 11 is a stator iron core serving as a core of stator 10. Stator core 11 is, for example, a stacked body in which a plurality of electromagnetic steel sheets are stacked in the axial direction in which axial center A1 of first rotating shaft 22 of first rotating body 20 extends. Note that stator core 11 is not limited to a stacked body of a plurality of steel sheets, and may be a bulk body made of magnetic material. Hereinafter, a direction from the bottom to the top in the drawing of Fig. 2 and a direction from the left to the right in the drawing of Fig. 3 are referred to as an axial first side, and a direction from the top to the bottom in the drawing of Fig. 2 and a direction from the right to the left in the drawing of Fig. 3 are referred to as an axial second side.

Coil 12 is a winding coil which is an armature winding of stator 10, and a conductive wire is wound to cause a magnetic flux that acts on second rotating body 30 to be generated by a current flowing through coil 12. The plurality of coils 12 correspond to the plurality of teeth 15 on a one-to-one basis, and each coil 12 is, for example, a concentrated winding coil wound around the corresponding tooth 15. In addition, coil 12 is configured as a three-phase winding so that first rotating body 20 can be rotated as a three-phase synchronous motor.

Each permanent magnet 13 is disposed on the radially inner side of each coil 12 on the inner peripheral surface of stator 10. Permanent magnet 13 is disposed across two adjacent teeth 15. Permanent magnet 13 is magnetized to have a magnetic pole direction in the radial direction of stator 10. Permanent magnet 13 is, for example, a sintered magnet.

### (3) First rotating body

First rotating body 20 includes first rotor 21 having a tubular shape and first rotating shaft 22.

First rotor 21 is a pole piece part functioning as a low-speed rotor, and includes frame 25 and a plurality of pole pieces 26. Frame 25 includes disk-shaped bottom 251 in which an opening is formed at the center, and cylinder 252 extending from an outer peripheral edge of bottom 251 toward the axial first side. Each of the plurality of pole pieces 26 is a magnetic pole piece made of magnetic material. The plurality of pole pieces 26 are inserted into notches of cylinder 252 of frame 25 and molded and fixed by molding resin 27.

The plurality of pole pieces 26 are annularly disposed along the circumferential direction of second rotating body 30. Each of the plurality of pole pieces 26 is an elongated magnetic member made of magnetic material. Each of the plurality of pole pieces 26 is a stacked body in which a plurality of steel sheets are stacked. Note that pole piece 26 is not limited to a stacked body of a plurality of steel sheets, and may be a bulk body made of magnetic material.

The plurality of pole pieces 26 radially face permanent magnet 34 (described later) of second rotating body 30, and also radially face the plurality of teeth 15 and the plurality of permanent magnets 13 of stator 10.

First rotating shaft 22 functions as an output shaft, and includes main body 221 and support shaft 222. Support shaft 222 extends from main body 221 toward the axial first side and enters the radially inner side of second rotor 31 (described later).

First rotor 21 is fixed to first rotating shaft 22. Specifically, an inner peripheral end of bottom 251 of frame 25 is fixed to main body 221 of first rotating shaft 22 by bolt 23. In the configuration described above, first rotor 21 is cantilevered by first rotating shaft 22. Therefore, for example, first rotating body 20 and second rotating body 30 can be easily assembled.

### (4) Second rotating body

Second rotating body 30 includes second rotor 31 having a tabular shape and disposed on the radially inner side of first rotor 21, and second rotating shaft 32 that is coaxial with first rotating shaft 22.

Second rotor 31 functions as a high-speed rotor and includes rotor core 33 and a plurality of permanent magnets 34.

Rotor core 33 is a rotor iron core serving as a core of second rotor 31, and is, for example, a stacked body in which a plurality of electromagnetic steel sheets are stacked in the axial direction of second rotating shaft 32. Note that rotor core 33 is not limited to the stacked body of electromagnetic steel sheets, but may be a bulk body made of magnetic material. Rotor core 33 has a cylindrical shape and has internal space 61.

The plurality of permanent magnets 34 are provided in rotor core 33. Because second rotor 31 is a surface permanent magnet (SPM) rotor, the plurality of permanent magnets 34 are provided on the outer peripheral side surface of rotor core 33. Specifically, the plurality of permanent magnets 34 are continuously disposed in the circumferential direction of rotor core 33 so as to cover the entire outer peripheral surface thereof. The plurality of permanent magnets 34 are magnetized to have a magnetic pole direction in the radial direction of second rotor 31, and is disposed such that N poles and S poles alternately and evenly present along the circumferential direction of rotor core 33.

Second rotating shaft 32 is a rod-like shaft and is fixed to second rotor 31. Specifically, as illustrated in Fig. 2, second rotating shaft 32 is fixed to one axial end surface of second rotor 31 with bolt 35. For example, in Figs. 2 and 3, second rotating shaft 32 is disposed on the axial first side with respect to first rotating shaft 22.

Stator 10, first rotor 21 of first rotating body 20, and second rotor 31 of second rotating body 30 are disposed in this order from the radially outer side toward the radially inner side. Therefore, there is an air gap between stator 10 and first rotor 21 of first rotating body 20, and there is an air gap also between first rotor 21 of first rotating body 20 and second rotor 31 of second rotating body 30.

Note that the rotation speed of second rotating shaft 32 may be detected by a sensor.

### (5) Housing

Housing 40 includes a plurality of components. Specifically, housing 40 includes sleeve 41 having a tubular shape, first bracket 42, and second bracket 43.

First bracket 42 is disposed so as to close the opening on one side of sleeve 41. First bracket 42 is provided with third bearing holder 421 for holding third bearing 53.

Second bracket 43 is disposed so as to close the opening on the other side of sleeve 41. Second bracket 43 is provided with first bearing holder 431 for holding first bearing 51.

Sleeve 41, first bracket 42, and second bracket 43 are made of, for example, metal material, but may be made of resin material. Further, sleeve 41, first bracket 42, and second bracket 43 may be made of the same material or different materials.

### (6) Bearing

First rotating body 20 and second rotating body 30 are configured to be able to rotate coaxially and independently of each other.

First bearing 51 is disposed between first bearing holder 431 of second bracket 43 and main body 221 of first rotating shaft 22.

Second bearing 52 is disposed between support shaft 222 of first rotating shaft 22 and second rotor 31 in internal space 61 of rotor core 33. Second bearing 52 is of a double bearing type, and includes first small bearing 54 and second small bearing 55. First small bearing 54 and second small bearing 55 have the same size, and each have a smaller diameter than first bearing 51 and third bearing 53. First small bearing 54 and second small bearing 55 are disposed apart from each other along the axial direction of support shaft 222 of first rotating shaft 22. Note that second small bearing 55 may be smaller than first small bearing 54.

Third bearing 53 is disposed between the inner peripheral surface of third bearing holder 421 of first bracket 42 and the outer peripheral surface of second rotating shaft 32.

First bearing 51, second bearing 52, and third bearing 53 are, for example, ball bearings, but are not limited thereto as long as the bearings can rotatably support first rotating shaft 22 and second rotating shaft 32.

### (7) Operation of magnetic-geared motor

When the AC current from the inverter is energized to coil 12 of stator 10, a field current flows through coil 12, and a magnetic flux is generated in stator 10 according to the current control phase. Then, the magnetic force generated by interaction between the magnetic flux generated by stator 10 and the magnetic flux generated by permanent magnets 34 of second rotating body 30 produces a torque for rotating second rotating body 30, and second rotating body 30 rotates. At this time, the magnetic flux generated from second rotating body 30 is modulated by pole piece 26 of first rotating body 20, and thus, a harmonic magnetic flux is generated between first rotating body 20 and stator 10. As a result, first rotating body 20 is decelerated according to a predetermined gear ratio (reduction ratio) and rotates with high torque.

### (8) Effects

As described above, second bearing 52 is disposed on the radially inner side of second rotor 31. Therefore, a small-diameter bearing can be used as second bearing 52, and cost reduction can be realized.

In particular, because second bearing 52, which is one of the bearings supporting second rotor 31 being the rotor disposed on the radially innermost side, is disposed on the radially inner side of second rotor 31, a small-diameter bearing can be used as second bearing 52, and the cost reduction can be realized.

Furthermore, by configuring second bearing 52 as first small bearing 54 and second small bearing 55, high bending rigidity can be secured between first rotating shaft 22 and rotor core 33. Therefore, the number of bearings required between the first rotating shaft and the housing, which has conventionally been two, can be reduced to one (specifically, in the present exemplary embodiment, first bearing 51 is provided singly), and as a result, the length in the axial direction of the entire of magnetic-geared motor 1 can be shortened.

### (Second exemplary embodiment)

In the first exemplary embodiment, magnetic-geared motor 1 has second rotating shaft 32, but the second rotating shaft may be omitted.

Such an example will be described as a second exemplary embodiment with reference to Fig. 4. Fig. 4 is a schematic cross-sectional view of magnetic-geared motor 1A according to the second exemplary embodiment. Note that, because the basic configuration and the basic function of the second exemplary embodiment are the same as those of the first exemplary embodiment, different points will be mainly described (hereinafter, the same applies to other exemplary embodiments).

### (1) Overall configuration of magnetic-geared motor

Magnetic-geared motor 1A includes stator 10A, first rotating body 20A, and second rotating body 30A.

Magnetic-geared motor 1A further includes housing 40A, first bearing 51A, second bearing 52A, and third bearing 53A. Housing 40A is a case for housing stator 10A, first rotating body 20A, and second rotating body 30A, and constitutes an outer shell of magnetic-geared motor 1A. First bearing 51A, second bearing 52A, and third bearing 53A are ball bearings.

### (2) Stator

Stator 10A generates magnetic force acting on first rotating body 20A and second rotating body 30A. Specifically, stator 10A is configured such that N poles and S poles alternately appear along the circumferential direction on an air gap surface facing second rotating body 30A.

Stator 10A in the present exemplary embodiment includes, similarly to stator 10 indicated in the first exemplary embodiment, stator core 11A having a plurality of teeth and a yoke, a plurality of coils 12A wound around the plurality of teeth, and a plurality of permanent magnets.

### (3) First rotating body

First rotating body 20A includes first rotor 21A having a tubular shape and first rotating shaft 22A.

First rotor 21A is a pole piece part functioning as a low-speed rotor, and includes frame 25A and a plurality of pole pieces 26A. Frame 25A includes disk-shaped bottom 251A in which an opening is formed at the center, and cylinder 252A extending from an outer peripheral edge of bottom 251A toward the axial first side. Each of the plurality of pole pieces 26A is a magnetic pole piece made of magnetic material. The plurality of pole pieces 26A are inserted into notches of cylinder 252A of frame 25A and molded and fixed by molding resin.

The plurality of pole pieces 26A are annularly disposed along the circumferential direction of second rotating body 30A.

The plurality of pole pieces 26A radially face permanent magnet 34A (described later) of second rotating body 30A, and also radially face the plurality of teeth and the plurality of permanent magnets of stator 10A.

First rotating shaft 22A functions as an output shaft, and includes main body 221A and support shaft 222A. Support shaft 222A extends from main body 221A toward the axial first side and enters the radially inner side of second rotor 31A (described later). Support shaft 222A of first rotating shaft 22A extends further toward the axial first side than support shaft 222 (see Fig. 3) of the first exemplary embodiment.

First rotor 21A is fixed to first rotating shaft 22A. Specifically, an inner peripheral end of bottom 251A of frame 25A is fixed to main body 221A of first rotating shaft 22A by a bolt. In the configuration described above, first rotor 21A is cantilevered by first rotating shaft 22A. Therefore, for example, first rotating body 20A and second rotating body 30A can be easily assembled.

### (4) Second rotating body

Second rotating body 30A includes second rotor 31A having a tabular shape and disposed on the radially inner side of first rotor 21A.

Second rotor 31 functions as a high-speed rotor and includes rotor core 33A and a plurality of permanent magnets 34A.

Rotor core 33A is a rotor iron core serving as a core of second rotor 31A. Rotor core 33A has a cylindrical shape and has internal space 61A.

The plurality of permanent magnets 34A are provided in rotor core 33A. Because second rotor 31A is a surface permanent magnet (SPM) rotor, the plurality of permanent magnets 34A are provided on the outer peripheral side surface of rotor core 33A. Specifically, the plurality of permanent magnets 34A are continuously disposed in the circumferential direction of rotor core 33A so as to cover the entire outer peripheral surface thereof. The plurality of permanent magnets 34A are magnetized to have a magnetic pole direction in the radial direction of second rotor 31A, and is disposed such that N poles and S poles alternately and evenly present along the circumferential direction of rotor core 33A.

Stator 10A, first rotor 21A of first rotating body 20A, and second rotor 31A of second rotating body 30A are disposed in this order from the radially outer side toward the radially inner side. Therefore, there is an air gap between stator 10A and first rotor 21A of first rotating body 20A, and there is an air gap also between first rotor 21A of first rotating body 20A and second rotor 31A of second rotating body 30A.

### (5) Housing

Housing 40A includes a plurality of components. Specifically, housing 40 includes sleeve 41A having a tubular shape, first bracket 42A, and second bracket 43A.

First bracket 42A is disposed so as to close the opening on one side of sleeve 41A. First bracket 42A is provided with third bearing holder 421A for holding third bearing 53A.

Second bracket 43A is disposed so as to close the opening on the other side of sleeve 41A. Second bracket 43A is provided with first bearing holder 431A for holding first bearing 51A.

### (6) Bearing

First rotating body 20A and second rotating body 30A are configured to be able to rotate coaxially and independently of each other.

First bearing 51A is disposed between first bearing holder 431A of second bracket 43A and main body 221A of first rotating shaft 22A. Third bearing 53A is disposed between third bearing holder 421A of first bracket 42A and the tip of support shaft 222A of first rotating shaft 22A. That is, the tip of support shaft 222A is rotatably supported by housing 40A with third bearing 53A interposed therebetween.

Second bearing 52A is disposed between support shaft 222A of first rotating shaft 22A and second rotor 31A in internal space 61A of rotor core 33A. Second bearing 52A is of a double bearing type, and includes first small bearing 54A and second small bearing 55A. First small bearing 54A and second small bearing 55A have the same size, and each have a smaller diameter than first bearing 51A. First small bearing 54A and second small bearing 55A are disposed apart from each other along the axial direction of support shaft 222A of first rotating shaft 22A. Note that first small bearing 54A and second small bearing 55A may not have the same size.

As described above, in magnetic-geared motor 1A, second rotating shaft 32 (see Fig. 3) of the first exemplary embodiment is omitted, and second rotor 31A includes rotor core 33A having a cylindrical shape and the plurality of permanent magnets 34A. Further, support shaft 222A of first rotating shaft 22A extends further to the axial first side than support shaft 222 of the first exemplary embodiment, and is fitted into the radially inner side of third bearing 53A. That is, the tip of support shaft 222A is rotatably supported by housing 40A with third bearing 53A interposed therebetween.

### (7) Effects

Also in this exemplary embodiment, because second bearing 52A is disposed on the radially inner side of second rotor 31A, the same effect as that of the first exemplary embodiment can be obtained.

### (Third exemplary embodiment)

In the first exemplary embodiment and the second exemplary embodiment, second bearing (52, 52A) of magnetic-geared motor (1, 1A) is a double bearing, but second bearing may be provided singly.

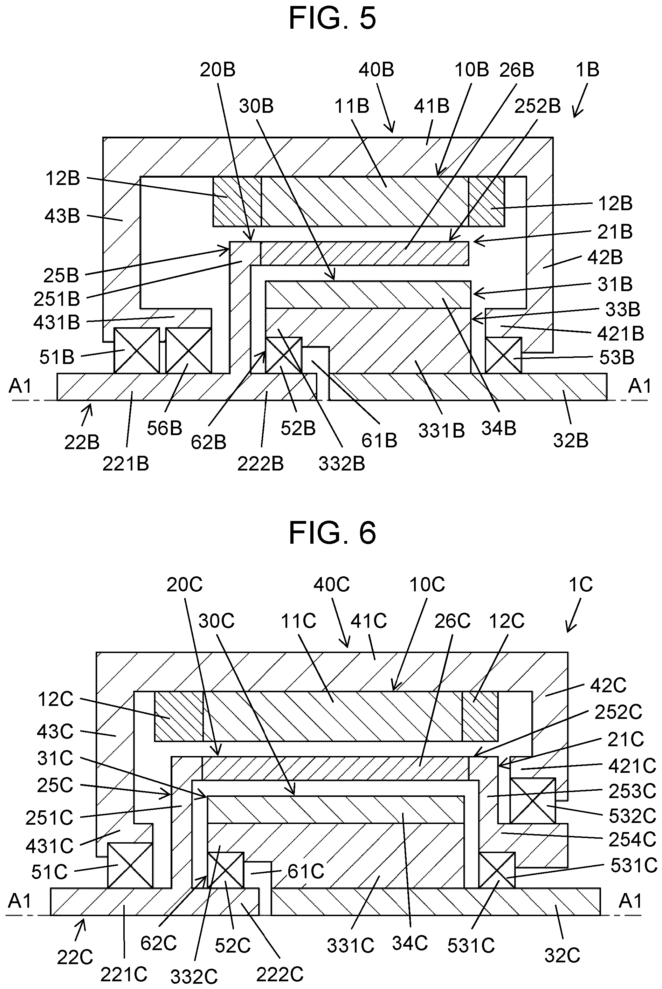

Such an example will be described as a third exemplary embodiment with reference to Fig. 5. Fig. 5 is a schematic cross-sectional view of magnetic-geared motor 1B according to the third exemplary embodiment.

### (1) Overall configuration of magnetic-geared motor

Magnetic-geared motor 1B includes stator 10B, first rotating body 20B, and second rotating body 30B.

Magnetic-geared motor 1B further includes housing 40B, first bearing 51B, second bearing 52B, and third bearing 53B. Housing 40B is a case for housing stator 10B, first rotating body 20B, and second rotating body 30B, and constitutes an outer shell of magnetic-geared motor 1B. First bearing 51B, second bearing 52B, and third bearing 53B are ball bearings.

### (2) Stator

Stator 10B generates magnetic force acting on first rotating body 20B and second rotating body 30B. Specifically, stator 10B is configured such that N poles and S poles alternately appear along the circumferential direction on an air gap surface facing second rotating body 30B.

Stator 10B in the present exemplary embodiment includes, similarly to stator 10 indicated in the first exemplary embodiment, stator core 11B having a plurality of teeth and a yoke, a plurality of coils 12B wound around the plurality of teeth, and a plurality of permanent magnets.

### (3) First rotating body

First rotating body 20B includes first rotor 21B having a tubular shape and first rotating shaft 22B.

First rotor 21B is a pole piece part functioning as a low-speed rotor, and includes frame 25B and a plurality of pole pieces 26B. Frame 25B includes disk-shaped bottom 251B in which an opening is formed at the center, and cylinder 252B extending from an outer peripheral edge of bottom 251B toward the axial first side. Each of the plurality of pole pieces 26B is a magnetic pole piece made of magnetic material. The plurality of pole pieces 26B are inserted into notches of cylinder 252B of frame 25B and molded and fixed by molding resin.

The plurality of pole pieces 26B are annularly disposed along the circumferential direction of second rotating body 30B.

The plurality of pole pieces 26B radially face permanent magnet 34B (described later) of second rotating body 30B, and also radially face the plurality of teeth and the plurality of permanent magnets of stator 10B.

First rotating shaft 22B functions as an output shaft, and includes main body 221B and support shaft 222B. Support shaft 222B extends from main body 221B toward the axial first side and enters the radially inner side of second rotor 31B (described later).

First rotor 21B is fixed to first rotating shaft 22B. Specifically, an inner peripheral end of bottom 251B of frame 25B is fixed to main body 221B of first rotating shaft 22B by a bolt. In the configuration described above, first rotor 21B is cantilevered by first rotating shaft 22B. Therefore, for example, first rotating body 20B and second rotating body 30B can be easily assembled.

### (4) Second rotating body

Second rotating body 30B includes second rotor 31B having a tabular shape and disposed on the radially inner side of first rotor 21B.

Second rotor 31 functions as a high-speed rotor and includes rotor core 33B and a plurality of permanent magnets 34B.

Rotor core 33B is a rotor iron core serving as a core of second rotor 31B. Rotor core 33B has a cylindrical shape and has internal space 61B.

The plurality of permanent magnets 34B are provided in rotor core 33B. Because second rotor 31B is a surface permanent magnet (SPM) rotor, the plurality of permanent magnets 34B are provided on the outer peripheral side surface of rotor core 33B. Specifically, the plurality of permanent magnets 34B are continuously disposed in the circumferential direction of rotor core 33B so as to cover the entire outer peripheral surface thereof. The plurality of permanent magnets 34B are magnetized to have a magnetic pole direction in the radial direction of second rotor 31B, and is disposed such that N poles and S poles alternately and evenly present along the circumferential direction of rotor core 33B.

Stator 10B, first rotor 21B of first rotating body 20B, and second rotor 31B of second rotating body 30B are disposed in this order from the radially outer side toward the radially inner side. Therefore, there is an air gap between stator 10B and first rotor 21B of first rotating body 20B, and there is an air gap also between first rotor 21B of first rotating body 20B and second rotor 31B of second rotating body 30B.

### (5) Housing

Housing 40B includes a plurality of components. Specifically, housing 40B includes sleeve 41B having a tubular shape, first bracket 42B, and second bracket 43B.

First bracket 42B is disposed so as to close the opening on one side of sleeve 41B. First bracket 42B is provided with third bearing holder 421B for holding third bearing 53B.

Second bracket 43B is disposed so as to close the opening on the other side of sleeve 41B. Second bracket 43B is provided with first bearing holder 431B for holding first bearing 51B.

### (6) Bearing

First rotating body 20B and second rotating body 30B are configured to be able to rotate coaxially and independently of each other.

First bearing 51B is disposed between first bearing holder 431B of second bracket 43B and main body 221B of first rotating shaft 22B. Note that, in the present exemplary embodiment, in addition to first bearing 51B, fifth bearing 56B is disposed between first bearing holder 431B of second bracket 43B and main body 221B of first rotating shaft 22B.

Second bearing 52B is disposed between support shaft 222B of first rotating shaft 22B and second rotor 31B in internal space 61B of rotor core 33B.

As illustrated in Fig. 5, in magnetic-geared motor 1B, second bearing 52B is provided singly, and second bearing 52B is disposed on the radially inner side of second rotor 31B. Specifically, rotor core 33B of second rotor 31B includes first portion 331B supported by second rotating shaft 32B and second portion 332B extending from first portion 331B toward the axial second side. Second portion 332B has an inner diameter longer than that of first portion 331B and has internal space 61B, and thus, gap 62B is secured between the inner peripheral surface of second portion 332B and the outer peripheral surface of support shaft 222B. Second bearing 52B is disposed between support shaft 222B of first rotating shaft 22B and second portion 332B of rotor core 33B in internal space 61B of second portion 332B.

Third bearing 53B is disposed between third bearing holder 421B of first bracket 42B and second rotating shaft 32B.

### (7) Effects

Also in this exemplary embodiment, because second bearing 52B is disposed on the radially inner side of second rotor 31B, the same effect as that of the first exemplary embodiment can be obtained regarding the downsizing of magnetic-geared motor 1B in the radial direction.

### (Fourth exemplary embodiment)

In the first exemplary embodiment, first rotor 21 is cantilevered by first rotating shaft 22, but the first rotor may be supported at both ends by the first rotating shaft.

Such an example will be described as a fourth exemplary embodiment with reference to Fig. 6. Fig. 6 is a schematic cross-sectional view of magnetic-geared motor 1C according to the fourth exemplary embodiment.

### (1) Overall configuration of magnetic-geared motor

Magnetic-geared motor 1C includes stator 10C, first rotating body 20C, and second rotating body 30C.

Magnetic-geared motor 1C further includes housing 40C, first bearing 51C, second bearing 52C, third bearing 531C, and fourth bearing 532C. Housing 40C is a case for housing stator 10C, first rotating body 20C, and second rotating body 30C, and constitutes an outer shell of magnetic-geared motor 1C. First bearing 51C, second bearing 52C, third bearing 531C, and fourth bearing 532C are ball bearings.

### (2) Stator

Stator 10C generates magnetic force acting on first rotating body 20C and second rotating body 30C. Specifically, stator 10C is configured such that N poles and S poles alternately appear along the circumferential direction on an air gap surface facing second rotating body 30C.

Stator 10C in the present exemplary embodiment includes, similarly to stator 10 indicated in the first exemplary embodiment, stator core 11C having a plurality of teeth and a yoke, a plurality of coils 12C wound around the plurality of teeth, and a plurality of permanent magnets.

### (3) First rotating body

First rotating body 20C includes first rotor 21C having a tubular shape and first rotating shaft 22C.

First rotor 21C is a pole piece part functioning as a low-speed rotor, and includes frame 25C and a plurality of pole pieces 26C.

As illustrated in Fig. 6, in magnetic-geared motor 1C, frame 25C of first rotor 21C includes first bottom 251C having a disk shape, cylinder 252C extending from an outer peripheral edge of first bottom 251C toward the axial first side, second bottom 253C disposed at the other end of cylinder 252C, and sleeve 254C extending from an inner peripheral edge of second bottom 253C toward the axial first side.

Each of the plurality of pole pieces 26C is a magnetic pole piece made of magnetic material. The plurality of pole pieces 26C are inserted into notches of cylinder 252C of frame 25C and molded and fixed by molding resin.

The plurality of pole pieces 26C are annularly disposed along the circumferential direction of second rotating body 30C.

The plurality of pole pieces 26C radially face permanent magnet 34C (described later) of second rotating body 30C, and also radially face the plurality of teeth and the plurality of permanent magnets of stator 10C.

First rotating shaft 22C functions as an output shaft, and includes main body 221C and support shaft 222C. Support shaft 222C extends from main body 221C toward the axial first side and enters the radially inner side of second rotor 31C (described later).

### (4) Second rotating body

Second rotating body 30C includes second rotor 31C having a tabular shape and disposed on the radially inner side of first rotor 21C.

Second rotor 31 functions as a high-speed rotor and includes rotor core 33C and a plurality of permanent magnets 34C.

Rotor core 33C is a rotor iron core serving as a core of second rotor 31C. Rotor core 33C has a cylindrical shape and has internal space 61C.

The plurality of permanent magnets 34C are provided in rotor core 33C. Because second rotor 31C is a surface permanent magnet (SPM) rotor, the plurality of permanent magnets 34C are provided on the outer peripheral side surface of rotor core 33C. Specifically, the plurality of permanent magnets 34C are continuously disposed in the circumferential direction of rotor core 33C so as to cover the entire outer peripheral surface thereof. The plurality of permanent magnets 34C are magnetized to have a magnetic pole direction in the radial direction of second rotor 31C, and is disposed such that N poles and S poles alternately and evenly present along the circumferential direction of rotor core 33C.

Stator 10C, first rotor 21C of first rotating body 20C, and second rotor 31C of second rotating body 30C are disposed in this order from the radially outer side toward the radially inner side. Therefore, there is an air gap between stator 10C and first rotor 21C of first rotating body 20C, and there is an air gap also between first rotor 21C of first rotating body 20C and second rotor 31C of second rotating body 30C.

### (5) Housing

Housing 40C includes a plurality of components. Specifically, housing 40C includes sleeve 41C having a tubular shape, first bracket 42C, and second bracket 43C.

First bracket 42C is disposed so as to close the opening on one side of sleeve 41C. First bracket 42C is provided with, on the inner peripheral end thereof, bearing holder 421C for holding fourth bearing 532C.

Second bracket 43C is disposed so as to close the opening on the other side of sleeve 41C. Second bracket 43C is provided with, on the inner peripheral end thereof, first bearing holder 431C for holding first bearing 51C.

### (6) Bearing

First rotating body 20C and second rotating body 30C are configured to be able to rotate coaxially and independently of each other.

First bearing 51C is disposed between first bearing holder 431C of second bracket 43C and main body 221C of first rotating shaft 22C.

Third bearing 531C is disposed between the inner peripheral surface of sleeve 254C and the outer peripheral surface of second rotating shaft 32C.

Fourth bearing 532C is disposed between the outer peripheral surface of sleeve 254C and bearing holder 421C of first bracket 42C of housing 40C.

Second bearing 52C is disposed between support shaft 222C of first rotating shaft 22C and second rotor 31C in internal space 61C of rotor core 33C.

As illustrated in Fig. 6, in magnetic-geared motor 1C, second bearing 52C is provided singly, and second bearing 52C is disposed on the radially inner side of second rotor 31C. Specifically, rotor core 33C of second rotor 31C includes first portion 331C supported by second rotating shaft 32C and second portion 332C extending from first portion 331C toward the axial second side. Second portion 332C has an inner diameter longer than that of first portion 331C and has internal space 61C, and thus, gap 62C is secured between the inner peripheral surface of second portion 332C and the outer peripheral surface of support shaft 222C. Second bearing 52C is disposed between support shaft 222C of first rotating shaft 22C and second portion 332C of rotor core 33C in internal space 61C of second portion 332C.

### (7) Effects

As described above, one end of first rotor 21C on the axial second side is supported by first rotating shaft 22C. Specifically, one end of first rotor 21C on the axial first side is supported by second rotating shaft 32C with third bearing 531C interposed therebetween, and is further supported by housing 40C with fourth bearing 532C interposed therebetween. Because first rotor 21C is supported at both ends in this manner, the rotation of first rotor 21C is stabilized. Therefore, similarly to the first exemplary embodiment, the number of bearings required between the first rotating shaft and the housing, which has conventionally been two, can be reduced to one (specifically, in the present exemplary embodiment, first bearing 51C is provided singly), and as a result, the length in the axial direction of the entire of magnetic-geared motor 1C can be shortened.

Also in this exemplary embodiment, because second bearing 52C is disposed on the radially inner side of second rotor 31C, the same effect as that of the first exemplary embodiment can be obtained regarding the downsizing of magnetic-geared motor 1C in the radial direction.

### (Fifth exemplary embodiment)

In the fourth exemplary embodiment, magnetic-geared motor 1C has second rotating shaft 32C, but the second rotating shaft may be omitted.

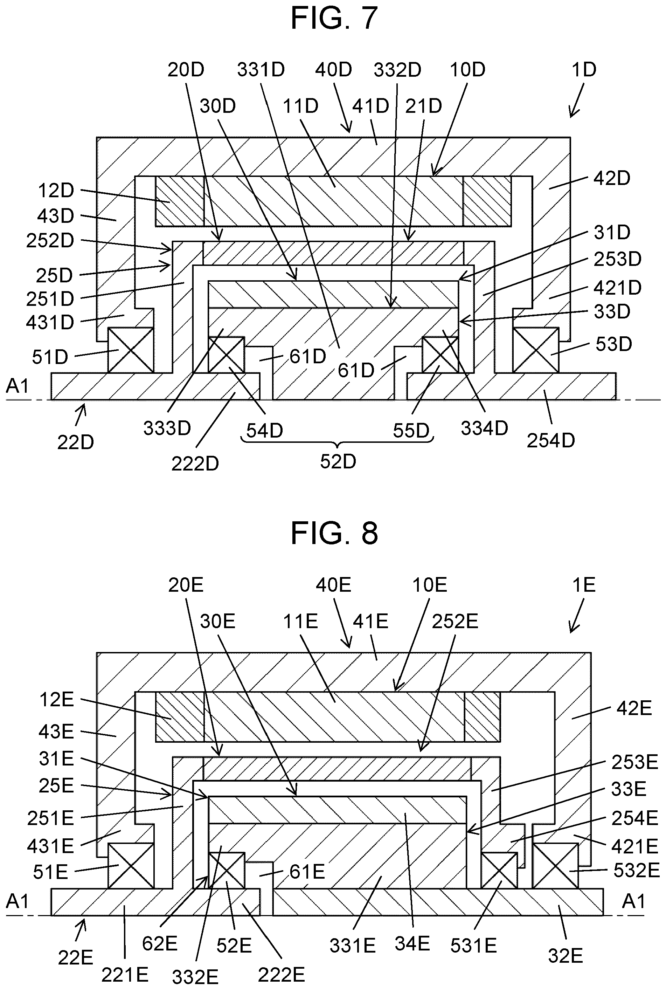

Such an example will be described as a fifth exemplary embodiment with reference to Fig. 7. Fig. 7 is a schematic cross-sectional view of magnetic-geared motor 1D according to the fifth exemplary embodiment.

### (1) Overall configuration of magnetic-geared motor

Magnetic-geared motor 1D includes stator 10D, first rotating body 20D, and second rotating body 30D.

Magnetic-geared motor 1D further includes housing 40D, first bearing 51D, second bearing 52D, and third bearing 53D. Housing 40D is a case for housing stator 10D, first rotating body 20D, and second rotating body 30D, and constitutes an outer shell of magnetic-geared motor 1D. First bearing 51D, second bearing 52D, and third bearing 53D are ball bearings.

### (2) Stator

Stator 10D generates magnetic force acting on first rotating body 20D and second rotating body 30D. Specifically, stator 10D is configured such that N poles and S poles alternately appear along the circumferential direction on an air gap surface facing second rotating body 30D.

Stator 10D in the present exemplary embodiment includes, similarly to stator 10 indicated in the first exemplary embodiment, stator core 11D having a plurality of teeth and a yoke, a plurality of coils 12D wound around the plurality of teeth, and a plurality of permanent magnets.

### (3) First rotating body

First rotating body 20D includes first rotor 21D having a tubular shape and first rotating shaft 22D.

First rotor 21D is a pole piece part functioning as a low-speed rotor, and includes frame 25D and a plurality of pole pieces 26D.

As illustrated in Fig. 7, in magnetic-geared motor 1D, frame 25D of first rotor 21D includes first bottom 251D having a disk shape, cylinder 252D extending from an outer peripheral edge of first bottom 251D to the axial first side, second bottom 253D disposed at the other end of cylinder 252D, and shaft body 254D extending from an inner peripheral edge of second bottom 253D to both sides in the axial direction.

Each of the plurality of pole pieces 26D is a magnetic pole piece made of magnetic material. The plurality of pole pieces 26D are inserted into notches of cylinder 252D of frame 25D and molded and fixed by molding resin.

The plurality of pole pieces 26D are annularly disposed along the circumferential direction of second rotating body 30D.

The plurality of pole pieces 26D radially face permanent magnet 34D (described later) of second rotating body 30D, and also radially face the plurality of teeth and the plurality of permanent magnets of stator 10D.

First rotating shaft 22D functions as an output shaft, and includes main body 221D and support shaft 222D. Support shaft 222D extends from main body 221D toward the axial first side and enters the radially inner side of second rotor 31D (described later).

### (4) Second rotating body

Second rotating body 30D includes second rotor 31D having a tabular shape and disposed on the radially inner side of first rotor 21D.

As illustrated in Fig. 7, in magnetic-geared motor 1D, second rotating shaft 32C (see Fig. 6) of the fourth exemplary embodiment is omitted, and second rotor 31D includes rotor core 33D and a plurality of permanent magnets 34D.

Stator 10D, first rotor 21D of first rotating body 20D, and second rotor 31D of second rotating body 30D are disposed in this order from the radially outer side toward the radially inner side. Therefore, there is an air gap between stator 10D and first rotor 21D of first rotating body 20D, and there is an air gap also between first rotor 21D of first rotating body 20D and second rotor 31D of second rotating body 30D.

Rotor core 33D is a rotor iron core serving as a core of second rotor 31D. Rotor core 33D includes disk 331D and cylinder 332D extending in the axial direction from an outer peripheral edge of disk 331D. Cylinder 332D includes first portion 333D extending toward the axial second side and second portion 334D extending toward the axial first side. First portion 333D has internal space 61D, and the inner peripheral surface of first portion 333D is separated from the outer peripheral surface of support shaft 222D. Second portion 334D has internal space 61D, and the inner peripheral surface of second portion 334D is separated from the outer peripheral surface of shaft body 254D (described later).

The plurality of permanent magnets 34D are provided in rotor core 33D. Because second rotor 31D is a surface permanent magnet (SPM) rotor, the plurality of permanent magnets 34D are provided on the outer peripheral side surface of rotor core 33D. Specifically, the plurality of permanent magnets 34D are continuously disposed in the circumferential direction of rotor core 33D so as to cover the entire outer peripheral surface thereof. The plurality of permanent magnets 34D are magnetized to have a magnetic pole direction in the radial direction of second rotor 31D, and is disposed such that N poles and S poles alternately and evenly present along the circumferential direction of rotor core 33D.

Support shaft 222D of first rotating shaft 22D extends further to the axial first side than support shaft 222 (see Fig. 3) of the first exemplary embodiment, and is fitted into the radially inner side of third bearing 53D. That is, the tip of support shaft 222D is rotatably supported by housing 40D with third bearing 53D interposed therebetween.

In magnetic-geared motor 1D, frame 25D of first rotor 21D includes first bottom 251D having a disk shape, cylinder 252D extending from an outer peripheral edge of first bottom 251D to the axial first side, second bottom 253D disposed at the other end of cylinder 252D, and shaft body 254D extending from an inner peripheral edge of second bottom 253D to both sides in the axial direction. Shaft body 254D is coaxial with support shaft 222D.

### (5) Housing

Housing 40D includes a plurality of components. Specifically, housing 40D includes sleeve 41D having a tubular shape, first bracket 42D, and second bracket 43D.

First bracket 42D is disposed so as to close the opening on one side of sleeve 41D. First bracket 42D is provided with third bearing holder 421D for holding third bearing 53D.

Second bracket 43D is disposed so as to close the opening on the other side of sleeve 41D. Second bracket 43D is provided with first bearing holder 431D for holding first bearing 51.

### (6) Bearing

First rotating body 20D and second rotating body 30D are configured to be able to rotate coaxially and independently of each other.

First bearing 51D is disposed between first bearing holder 431D of second bracket 43D and main body 221D of first rotating shaft 22D.

Third bearing 53D is disposed between the axial first side portion of shaft body 254D and third bearing holder 421D of first bracket 42D of housing 40D.

Second bearing 52D is disposed on the radially inner side of rotor core 33D. Specifically, second bearing 52D is of a double bearing type, and includes first small bearing 54D and second small bearing 55D. First small bearing 54D is disposed between support shaft 222D of first rotating shaft 22D and first portion 333D of rotor core 33D. Second small bearing 55D is disposed between the axial second side portion of shaft body 254D and second portion 334D of rotor core 33D.

### (7) Effects

Also in this exemplary embodiment, because second bearing 52D is disposed on the radially inner side of second rotor 31D, the same effect as that of the fourth exemplary embodiment can be obtained.

### (Sixth exemplary embodiment)

Fig. 8 is a schematic cross-sectional view of magnetic-geared motor 1E according to the sixth exemplary embodiment. Magnetic-geared motor 1E illustrated in Fig. 8 has the same basic structure as magnetic-geared motor 1C of the fourth exemplary embodiment in that the first rotating body is supported at both ends.

### (1) Overall configuration of magnetic-geared motor

Magnetic-geared motor 1E includes stator 10E, first rotating body 20E, and second rotating body 30E.

Magnetic-geared motor 1E further includes housing 40E, first bearing 51E, second bearing 52E, third bearing 531E, and fourth bearing 532E. Housing 40E is a case for housing stator 10E, first rotating body 20E, and second rotating body 30E, and constitutes an outer shell of magnetic-geared motor 1. First bearing 51E, second bearing 52E, third bearing 531E, and fourth bearing 532E are ball bearings.

### (2) Stator

Stator 10E generates magnetic force acting on first rotating body 20E and second rotating body 30E. Specifically, stator 10E is configured such that N poles and S poles alternately appear along the circumferential direction on an air gap surface facing second rotating body 30E.

Stator 10E in the present exemplary embodiment includes, similarly to stator 10 indicated in the first exemplary embodiment, stator core 11E having a plurality of teeth and a yoke, a plurality of coils 12E wound around the plurality of teeth, and a plurality of permanent magnets.

### (3) First rotating body

First rotating body 20E includes first rotor 21E having a tubular shape and first rotating shaft 22E.

First rotor 21E is a pole piece part functioning as a low-speed rotor, and includes frame 25E and a plurality of pole pieces 26E.

As illustrated in Fig. 8, in magnetic-geared motor 1E, frame 25E of first rotor 21E includes first bottom 251E having a disk shape, cylinder 252E extending from an outer peripheral edge of first bottom 251E toward the axial first side, second bottom 253E disposed at the other end of cylinder 252E, and sleeve 254E extending from an inner peripheral edge of second bottom 253E toward the axial first side.

Each of the plurality of pole pieces 26E is a magnetic pole piece made of magnetic material. The plurality of pole pieces 26E are inserted into notches of cylinder 252E of frame 25E and molded and fixed by molding resin.

The plurality of pole pieces 26E are annularly disposed along the circumferential direction of second rotating body 30E.

The plurality of pole pieces 26E radially face permanent magnet 34E (described later) of second rotating body 30E, and also radially face the plurality of teeth and the plurality of permanent magnets of stator 10E.

First rotating shaft 22E functions as an output shaft, and includes main body 221E and support shaft 222E. Support shaft 222E extends from main body 221E toward the axial first side and enters the radially inner side of second rotor 31E (described later).

### (4) Second rotating body

Second rotating body 30E includes second rotor 31E having a tabular shape and disposed on the radially inner side of first rotor 21E.

Second rotor 31E functions as a high-speed rotor and includes rotor core 33E and a plurality of permanent magnets 34E.

Rotor core 33E is a rotor iron core serving as a core of second rotor 31E. Rotor core 33E has a cylindrical shape and has internal space 61E.

The plurality of permanent magnets 34E are provided in rotor core 33E. Because second rotor 31E is a surface permanent magnet (SPM) rotor, the plurality of permanent magnets 34E are provided on the outer peripheral side surface of rotor core 33E. Specifically, the plurality of permanent magnets 34E are continuously disposed in the circumferential direction of rotor core 33E so as to cover the entire outer peripheral surface thereof. The plurality of permanent magnets 34E are magnetized to have a magnetic pole direction in the radial direction of second rotor 31E, and is disposed such that N poles and S poles alternately and evenly present along the circumferential direction of rotor core 33E.

Stator 10E, first rotor 21E of first rotating body 20E, and second rotor 31E of second rotating body 30E are disposed in this order from the radially outer side toward the radially inner side. Therefore, there is an air gap between stator 10E and first rotor 21E of first rotating body 20E, and there is an air gap also between first rotor 21E of first rotating body 20E and second rotor 31E of second rotating body 30E.

### (5) Housing

Housing 40E includes a plurality of components. Specifically, housing 40E includes sleeve 41E having a tubular shape, first bracket 42E, and second bracket 43E.

First bracket 42E is disposed so as to close the opening on one side of sleeve 41E. First bracket 42E is provided with bearing holder 421E for holding fourth bearing 532E.

Second bracket 43E is disposed so as to close the opening on the other side of sleeve 41E. Second bracket 43E is provided with first bearing holder 431E for holding first bearing 51.

### (6) Bearing

First rotating body 20E and second rotating body 30E are configured to be able to rotate coaxially and independently of each other.

First bearing 51E is disposed between first bearing holder 431E of second bracket 43E and main body 221E of first rotating shaft 22E.

Third bearing 531E is disposed between the inner peripheral surface of sleeve 254E and the outer peripheral surface of second rotating shaft 32E.

Second bearing 52E is disposed between support shaft 222E of first rotating shaft 22E and second rotor 31E in internal space 61E of rotor core 33E.

As illustrated in Fig. 8, in magnetic-geared motor 1E, second bearing 52E is provided singly, and second bearing 52E is disposed on the radially inner side of second rotor 31E. Specifically, rotor core 33E of second rotor 31E includes first portion 331E supported by second rotating shaft 32E and second portion 332E extending from first portion 331E toward the axial second side. Second portion 332E has an inner diameter longer than that of first portion 331E and has internal space 61E, and thus, gap 62E is secured between the inner peripheral surface of second portion 332E and the outer peripheral surface of support shaft 222B. Second bearing 52B is disposed between support shaft 222E of first rotating shaft 22E and second portion 332E of rotor core 33E in internal space 61E of second portion 332B.

Fourth bearing 532E is disposed between the outer peripheral surface of second rotating shaft 32E and bearing holder 421E of first bracket 42E of housing 40E.

### (7) Effects

Also in this exemplary embodiment, because second bearing 52E is disposed on the radially inner side of second rotor 31E, the same effect as that of the fourth exemplary embodiment can be obtained.

### (Seventh exemplary embodiment)

In the first to sixth exemplary embodiments, the support shaft is a part of the first rotor, but the support shaft may be a part of the housing.

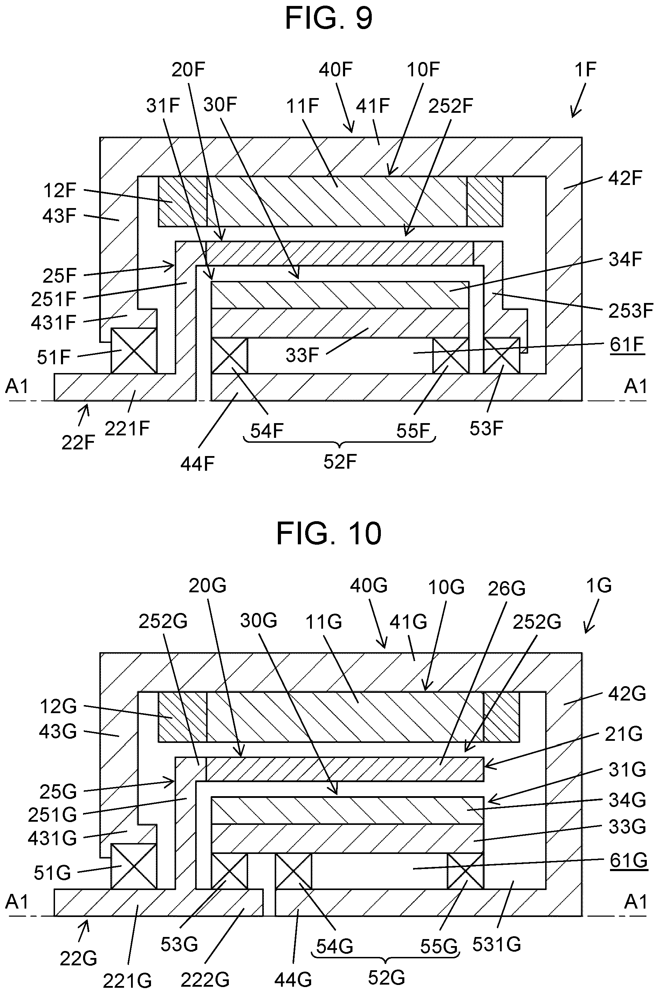

Such an example will be described as a seventh exemplary embodiment with reference to Fig. 9. Note that Fig. 9 is a schematic cross-sectional view of magnetic-geared motor 1F according to the seventh exemplary embodiment.

### (1) Overall configuration of magnetic-geared motor

Magnetic-geared motor 1F includes stator 10F, first rotating body 20F, and second rotating body 30F.

Magnetic-geared motor 1F further includes housing 40F, first bearing 51F, second bearing 52F, and third bearing 53F. Housing 40F is a case for housing stator 10F, first rotating body 20F, and second rotating body 30F, and constitutes an outer shell of magnetic-geared motor 1F. First bearing 51F, second bearing 52F, and third bearing 53F are ball bearings.

### (2) Stator

Stator 10F generates magnetic force acting on first rotating body 20F and second rotating body 30F. Specifically, stator 10F is configured such that N poles and S poles alternately appear along the circumferential direction on an air gap surface facing second rotating body 30F.

Stator 10F in the present exemplary embodiment includes, similarly to stator 10 indicated in the first exemplary embodiment, stator core 11F having a plurality of teeth and a yoke, a plurality of coils 12F wound around the plurality of teeth, and a plurality of permanent magnets.

### (3) First rotating body

First rotating body 20F includes first rotor 21F having a tubular shape and first rotating shaft 22F.

First rotor 21F is a pole piece part functioning as a low-speed rotor, and includes frame 25F and a plurality of pole pieces 26F. Frame 25F of the first rotor 21F includes first bottom 251F having a disk shape, cylinder 252 F extending from an outer peripheral edge of first bottom 251F toward the axial first side, and second bottom 253F disposed at the other end of cylinder 252F.

Each of the plurality of pole pieces 26F is a magnetic pole piece made of magnetic material. The plurality of pole pieces 26F are inserted into notches of cylinder 252F of frame 25F and molded and fixed by molding resin.

The plurality of pole pieces 26F are annularly disposed along the circumferential direction of second rotating body 30F.

The plurality of pole pieces 26F radially face permanent magnet 34F (described later) of second rotating body 30F, and also radially face the plurality of teeth and the plurality of permanent magnets of stator 10F.

First rotating shaft 22F functions as an output shaft, and includes main body 221F.

First rotor 21F is fixed to first rotating shaft 22F. Specifically, an inner peripheral end of first bottom 251F of frame 25F is fixed to main body 221F of first rotating shaft 22F by a bolt. In the configuration described above, first rotor 21F is cantilevered by first rotating shaft 22F. Therefore, for example, first rotating body 20F and second rotating body 30F can be easily assembled.

### (4) Second rotating body

Second rotating body 30F includes second rotor 31F having a tabular shape and disposed on the radially inner side of first rotor 21F.

Second rotor 31F functions as a high-speed rotor and includes rotor core 33F and a plurality of permanent magnets 34F.

Rotor core 33F is a rotor iron core serving as a core of second rotor 31F. Rotor core 33F has a cylindrical shape and has internal space 61F.

The plurality of permanent magnets 34F are provided in rotor core 33F. Because second rotor 31F is a surface permanent magnet (SPM) rotor, the plurality of permanent magnets 34F are provided on the outer peripheral side surface of rotor core 33F. Specifically, the plurality of permanent magnets 34F are continuously disposed in the circumferential direction of rotor core 33F so as to cover the entire outer peripheral surface thereof. The plurality of permanent magnets 34F are magnetized to have a magnetic pole direction in the radial direction of second rotor 31F, and is disposed such that N poles and S poles alternately and evenly present along the circumferential direction of rotor core 33F.

Stator 10F, first rotor 21F of first rotating body 20F, and second rotor 31F of second rotating body 30F are disposed in this order from the radially outer side toward the radially inner side. Therefore, there is an air gap between stator 10F and first rotor 21F of first rotating body 20F, and there is an air gap also between first rotor 21F of first rotating body 20F and second rotor 31F of second rotating body 30F.

### (5) Housing

Housing 40F includes a plurality of components. Specifically, housing 40F includes sleeve 41F having a tubular shape, first bracket 42F, and second bracket 43F.

First bracket 42F is disposed so as to close the opening on one side of sleeve 41F. First bracket 42F is provided with third bearing holder 421F for holding third bearing 53F.

Second bracket 43F is disposed so as to close the opening on the other side of sleeve 41F.

Housing 40F further includes support shaft 44F. Support shaft 44F extends from the radial center of first bracket 42F of the housing 40F toward the axial second side, and enters the radially inner side of second rotor 31F.

### (6) Bearing

First rotating body 20F and second rotating body 30F are configured to be able to rotate coaxially and independently of each other.

First bearing 51F is disposed between first bearing holder 431F of second bracket 43F and main body 221F of first rotating shaft 22F.

Second bearing 52F is disposed between support shaft 44F of housing 40F and second rotor 31F in internal space 61F of rotor core 33. Second bearing 52F is of a double bearing type, and includes first small bearing 54F and second small bearing 55F. First small bearing 54F and second small bearing 55F have the same size, and each have a smaller diameter than first bearing 51F. First small bearing 54F and second small bearing 55F are disposed apart from each other along the axial direction of support shaft 44F of housing 40F.

Third bearing 53F is disposed between the inner peripheral surface of second bottom 253F and the outer peripheral surface of support shaft 44F of housing 40F.

### (7) Effects

Also in this exemplary embodiment, because second bearing 52F is disposed on the radially inner side of second rotor 31F, the same effect as that of the first exemplary embodiment can be obtained.

Furthermore, because housing 40F includes support shaft 44F, the structure of first rotating shaft 22F can be simplified.

### (Eighth exemplary embodiment)

Fig. 10 is a schematic cross-sectional view of magnetic-geared motor 1G according to an eighth exemplary embodiment. Magnetic-geared motor 1G illustrated in Fig. 10 has the same basic structure as magnetic-geared motor 1F of the seventh exemplary embodiment in that the second rotating body is supported by the support shaft of the housing.

### (1) Overall configuration of magnetic-geared motor

Magnetic-geared motor 1G includes stator 10G, first rotating body 20G, and second rotating body 30G.

Magnetic-geared motor 1G further includes housing 40G, first bearing 51G, second bearing 52G, and third bearing 53G. Housing 40G is a case for housing stator 10G, first rotating body 20G, and second rotating body 30G, and constitutes an outer shell of magnetic-geared motor 1G. First bearing 51G, second bearing 52G, and third bearing 53G are ball bearings.

### (2) Stator

Stator 10G generates magnetic force acting on first rotating body 20G and second rotating body 30G. Specifically, stator 10G is configured such that N poles and S poles alternately appear along the circumferential direction on an air gap surface facing second rotating body 30G.

Stator 10G in the present exemplary embodiment includes, similarly to stator 10 indicated in the first exemplary embodiment, stator core 11G having a plurality of teeth and a yoke, a plurality of coils 12G wound around the plurality of teeth, and a plurality of permanent magnets.

### (3) First rotating body

First rotating body 20G includes first rotor 21G having a tubular shape and first rotating shaft 22G.

First rotor 21G is a pole piece part functioning as a low-speed rotor, and includes frame 25G and a plurality of pole pieces 26G.

Frame 25G of first rotating body 20G includes bottom 251G and cylinder 252G. Pole piece 26G is attached to cylinder 252G. That is, in this exemplary embodiment, first rotor 21G is cantilevered by first rotating shaft 22G.

Each of the plurality of pole pieces 26G is a magnetic pole piece made of magnetic material. The plurality of pole pieces 26G are inserted into notches of cylinder 252G of frame 25G and molded and fixed by molding resin.

The plurality of pole pieces 26G are annularly disposed along the circumferential direction of second rotating body 30G.

The plurality of pole pieces 26G radially face permanent magnet 34G (described later) of second rotating body 30G, and also radially face the plurality of teeth and the plurality of permanent magnets of stator 10G.

First rotating shaft 22G functions as an output shaft, and includes main body 221G and support shaft 222G. Support shaft 222G extends from main body 221G toward the axial first side and enters the radially inner side of second rotor 31G (described later).

### (4) Second rotating body

Second rotating body 30G includes second rotor 31G having a tabular shape and disposed on the radially inner side of first rotor 21G.

Second rotor 31G functions as a high-speed rotor and includes rotor core 33G and a plurality of permanent magnets 34G.

Rotor core 33G is a rotor iron core serving as a core of second rotor 31G. Rotor core 33G has a cylindrical shape and has internal space 61G.

The plurality of permanent magnets 34G are provided in rotor core 33G. Because second rotor 31G is a surface permanent magnet (SPM) rotor, the plurality of permanent magnets 34G are provided on the outer peripheral side surface of rotor core 33G. Specifically, the plurality of permanent magnets 34G are continuously disposed in the circumferential direction of rotor core 33G so as to cover the entire outer peripheral surface thereof. The plurality of permanent magnets 34G are magnetized to have a magnetic pole direction in the radial direction of second rotor 31G, and is disposed such that N poles and S poles alternately and evenly present along the circumferential direction of rotor core 33G.

Stator 10G, first rotor 21G of first rotating body 20G, and second rotor 31G of second rotating body 30G are disposed in this order from the radially outer side toward the radially inner side. Therefore, there is an air gap between stator 10G and first rotor 21G of first rotating body 20G, and there is an air gap also between first rotor 21G of first rotating body 20G and second rotor 31G of second rotating body 30G.

### (5) Housing

Housing 40G includes a plurality of components. Specifically, housing 40G includes sleeve 41G having a tubular shape, first bracket 42G, and second bracket 43G.

First bracket 42G is disposed so as to close the opening on one side of sleeve 41G.

Second bracket 43G is disposed so as to close the opening on the other side of sleeve 41G. Second bracket 43G is provided with first bearing holder 431G for holding first bearing 51.

Housing 40G further includes support shaft 44G. Support shaft 44G extends from the radial center of first bracket 42F of housing 40G toward the axial second side, and enters the radially inner side of second rotor 31G.

### (6) Bearing

First rotating body 20G and second rotating body 30G are configured to be able to rotate coaxially and independently of each other.

First bearing 51G is disposed between first bearing holder 431G of second bracket 43G and main body 221G of first rotating shaft 22G.

Second bearing 52G is disposed between support shaft 44G of housing 40G and second rotor 31G in internal space 61G of rotor core 33G. Second bearing 52G is of a double bearing type, and includes first small bearing 54G and second small bearing 55G. First small bearing 54G and second small bearing 55G have the same size, and each have a smaller diameter than first bearing 51G. First small bearing 54G and second small bearing 55G are disposed apart from each other along the axial direction of support shaft 44G of housing 40G.

Third bearing 53G is disposed between the inner peripheral surface of the axial second side end of rotor core 33G and the outer peripheral surface of the tip of support shaft 222G of first rotating shaft 22G.

### (7) Effects

Also in this exemplary embodiment, because second bearing 52G is disposed on the radially inner side of second rotor 31G, the same effect as that of the seventh exemplary embodiment can be obtained. Furthermore, third bearing 53G is also disposed on the radially inner side of second rotor 31G.

### (Ninth exemplary embodiment)

In the first to eighth exemplary embodiment, the inner rotor type motor has been described as the magnetic-geared motor, but the present disclosure can also be applied to an outer rotor type magnetic-geared motor.

### (1) Overall configuration of magnetic-geared motor

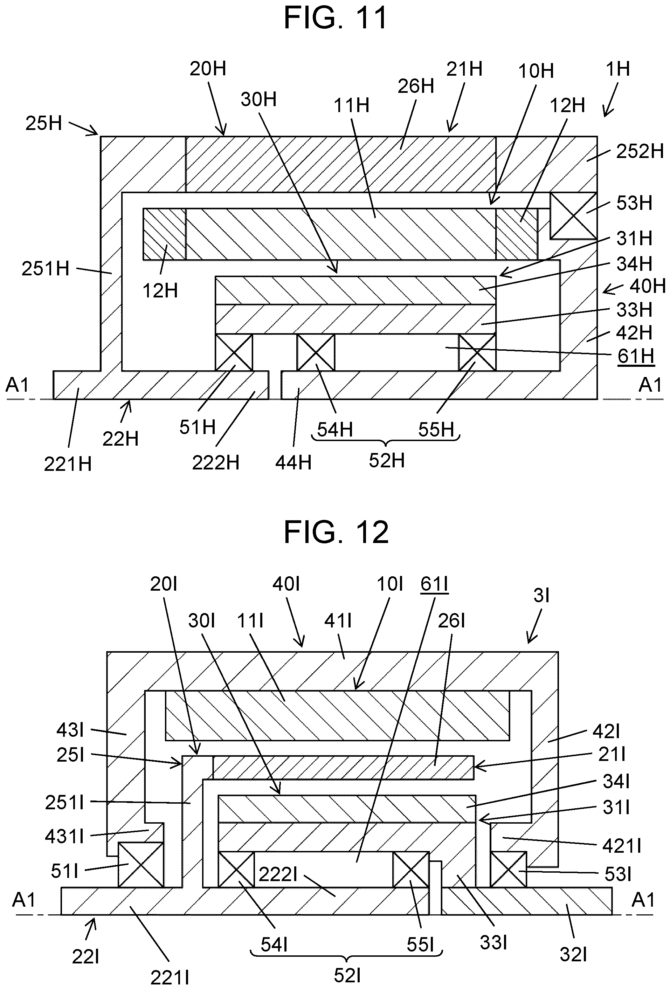

Magnetic-geared motor 1H according to a ninth exemplary embodiment will be described with reference to Fig. 11. Fig. 9 is a schematic cross-sectional view of magnetic-geared motor 1H according to the ninth exemplary embodiment.

Magnetic-geared motor 1H includes stator 10H, first rotating body 20H, and second rotating body 30H.

Magnetic-geared motor 1H further includes housing 40H, first bearing 51H, second bearing 52H, and third bearing 53H. Housing 40H is a case for holding stator 10H. First bearing 51H, second bearing 52H, and third bearing 53H are ball bearings.

Magnetic-geared motor 1H is an outer rotor type motor in which first rotating body 20H is disposed on the radially outer side of stator 10H.

Stator 10H, first rotating body 20H, and second rotating body 30H are coaxially disposed. That is, the center of stator 10H, the axial center of first rotating shaft 22H of first rotating body 20H, and the axial center of second rotating shaft 32H of second rotating body 30H coincide with each other, and are illustrated as axial center A1 in Fig. 11. Therefore, the rotation center of first rotating body 20H and second rotating body 30H coincide with each other.

### (2) Stator

Stator 10H generates magnetic force acting on first rotating body 20H and second rotating body 30H. Specifically, stator 10H is configured such that N poles and S poles alternately appear along the circumferential direction on an air gap surface facing second rotating body 30H.

Stator 10H includes, similarly to stator 10 indicated in the first exemplary embodiment, stator core 11H having a plurality of teeth and a yoke, a plurality of coils 12H wound around the plurality of teeth, and a plurality of permanent magnets. Stator core 11H is a stator iron core serving as a core of stator 10H, and generates a magnetic force for rotating first rotating body 20H and second rotating body 30H. For example, stator core 11H is a stacked body in which a plurality of electromagnetic steel sheets are stacked along the axial center of first rotating shaft 22H of first rotating body 20H.

Coil 12H is a winding coil which is an armature winding of stator 10H, and the conductive wire is wound such that magnetic flux acting on the first rotating body 20H is generated by a current flowing therethrough. The plurality of coils 12H correspond to the plurality of teeth on a one-to-one basis, and each coil 12H is, for example, a concentrated winding coil wound around the corresponding tooth. Coil 12H is configured as a three-phase winding so that first rotating body 20H can rotate to serve as a three-phase synchronous motor.

Each permanent magnet is disposed on the radially inner side of each coil 12H on the inner peripheral surface of stator 10H. The permanent magnet is disposed across two adjacent teeth. The permanent magnet is magnetized to have a magnetic pole direction in the radial direction of stator 10H. The permanent magnet is, for example, a sintered magnet.

Stator 10H is held by housing 40H. Specifically, housing 40H has bottom 42H having a disk shape and support shaft 44H extending from the center of bottom 42H toward the axial second side. Stator 10H extends from an outer peripheral edge of bottom 42H toward the axial second side. Support shaft 44H enters the radially inner side of second rotor 31H (described later).

### (3) First rotating body

First rotating body 20H includes first rotor 21H having a tubular shape and first rotating shaft 22H. First rotating body 20H rotates centered on axial center A1 of first rotating shaft 22H by the magnetic flux generated from stator 10H acting on first rotor 21H.

First rotor 21H is disposed on the radially outer side of stator 10H.

First rotor 21H is a pole piece part and includes frame 25H and a plurality of pole pieces 26H. Frame 25H has bottom 251H having a disk shape and cylinder 252H extending from an outer peripheral edge of bottom 251H toward the axial first side. Each of the plurality of pole pieces 26H is a magnetic pole piece made of magnetic material. The plurality of pole pieces 26H are inserted into notches of cylinder 252H of frame 25H and molded and fixed by molding resin.

The plurality of pole pieces 26H are annularly disposed along the circumferential direction of second rotating body 30H. Each of the plurality of pole pieces 26H is an elongated magnetic member made of magnetic material. Each of the plurality of pole pieces 26H is a stacked body in which a plurality of steel sheets are stacked.

The plurality of pole pieces 26H radially face permanent magnet 34H (described later) of second rotating body 30H, and also radially face the plurality of teeth and the plurality of permanent magnets of stator 10H.

First rotating shaft 22H includes main body 221H and support shaft 222H. Support shaft 222H extends from main body 221H toward the axial first side and enters the radially inner side of second rotor 31H.

First rotor 21H is fixed to first rotating shaft 22H. Specifically, an inner peripheral end of bottom 251H of frame 25H is fixed to main body 221H of first rotating shaft 22H by a bolt.

### (4) Second rotating body

Second rotating body 30H includes second rotor 31H having a tubular shape. Second rotor 31H is disposed on the radially inner side of stator 10H.

Second rotor 31H includes rotor core 33H and a plurality of permanent magnets 34H. Rotor core 33H is a rotor iron core serving as a core of second rotating body 30, and is, for example, a stacked body in which a plurality of electromagnetic steel sheets are stacked along the axial direction of second rotating shaft 32H. Note that rotor core 33H is not limited to the stacked body of electromagnetic steel sheets, but may be a bulk body made of magnetic material. Rotor core 33H has a cylindrical shape and has internal space 61H.

The plurality of permanent magnets 34H are provided in rotor core 33H. Because second rotating body 30H is a surface permanent magnet (SPM) rotor, the plurality of permanent magnets 34H are provided on the outer peripheral side surface of rotor core 33H. Specifically, the plurality of permanent magnets 34H are continuously disposed in the circumferential direction of rotor core 33H so as to cover the entire outer peripheral surface thereof. The plurality of permanent magnets 34H is magnetized to have a magnetic pole direction in the radial direction of second rotating body 30H, and is disposed such that N poles and S poles alternately and evenly present along the circumferential direction of second rotating shaft 32H.

First rotor 21H of first rotating body 20H, stator 10H, and second rotor 31H of second rotating body 30H are disposed in this order from the radially outer side toward the radially inner side. Therefore, there is an air gap between first rotor 21H of first rotating body 20H and stator 10H, and there is an air gap also between stator 10H and second rotor 31H of second rotating body 30H.

### (5) Bearing

First rotating body 20H and second rotating body 30H are configured to be able to rotate coaxially and independently of each other.

First bearing 51H is disposed between support shaft 222H and rotor core 33H of second rotor 31H.

Third bearing 53H is disposed between the inner peripheral surface of frame 25H at the tip in the axial direction and the outer peripheral surface of bottom 42H of housing 40H.

Second bearing 52H is disposed between support shaft 44H and second rotor 31H in internal space 61H of rotor core 33H. Second bearing 52H is of a double bearing type, and includes first small bearing 54H and second small bearing 55H. First small bearing 54H and second small bearing 55H have the same size, and each have a smaller diameter than third bearing 53H. First small bearing 54H and second small bearing 55H are disposed apart from each other along the axial direction of support shaft 44H.

### (6) Effects

As described above, second bearing 52H is disposed on the radially inner side of second rotor 31H. Therefore, a small-diameter bearing can be used as second bearing 52H, and cost reduction can be realized. Furthermore, magnetic-geared motor 1H can be downsized by utilizing internal space 61H of second rotor 31H.

### (Tenth exemplary embodiment)

In the first to ninth exemplary embodiments, the present disclosure is applied to the magnetic-geared motor in which a magnetic gear and a motor are integrated, but the present disclosure can be applied to a magnetic gear alone which is independent of a motor.

Such an example will be described as a tenth exemplary embodiment with reference to Fig. 12. Note that Fig. 12 is a schematic cross-sectional view of magnetic gear 3I according to the tenth exemplary embodiment.

### (1) Overall configuration of magnetic gear

Magnetic gear 3I includes stator 10I, first rotating body 20I, and second rotating body 30I.

Magnetic gear 3I further includes housing 40I, first bearing 511, second bearing 52I, and third bearing 53I. Housing 40I is a case for housing stator 10I, first rotating body 20I, and second rotating body 30I, and constitutes an outer shell of magnetic gear 3I. First bearing 51I, second bearing 52I, and third bearing 53I are ball bearings.

Stator 10I is disposed so as to surround first rotating body 20I and second rotating body 30I. Stator 10I, first rotating body 20I, and second rotating body 30I are coaxially disposed. That is, the center of stator 10I, the axial center of first rotating shaft 22I of first rotating body 20I, and the axial center of second rotating shaft 32I of second rotating body 30I coincide with each other. Therefore, the rotation center of first rotating body 20I and second rotating body 30I coincide with each other.

### (2) Stator

Stator 10I is configured such that N poles and S poles alternately appear along the circumferential direction on an air gap surface facing second rotating body 30I.

Stator 10I includes stator core 11I and a plurality of permanent magnets similarly to stator 10 described in the first exemplary embodiment. Stator core 11I is a stator iron core serving as a core of stator 10I. Stator core 11I is, for example, a stacked body in which a plurality of electromagnetic steel sheets are stacked in the axial direction in which axial center A1 of first rotating shaft 22I of first rotating body 20I extends. Note that stator core 11 is not limited to a stacked body of a plurality of steel sheets, and may be a bulk body made of magnetic material.

Each permanent magnet is disposed on the inner peripheral surface of stator 10I. A permanent magnet is magnetized to have a magnetic pole direction in the radial direction of stator 10I. The permanent magnet is, for example, a sintered magnet.

### (3) First rotating body

First rotating body 20I includes first rotor 21I having a tubular shape and first rotating shaft 22I.

First rotor 21I is a pole piece part functioning as a low-speed rotor, and includes frame 25I and a plurality of pole pieces 26I. Frame 25I has bottom 251I having a disk shape and a cylinder extending from an outer peripheral edge of bottom 2511 toward the axial first side. Each of the plurality of pole pieces 26I is a magnetic pole piece made of magnetic material. The plurality of pole pieces 26I are inserted into notches of the cylinder of frame 25I and molded and fixed by molding resin.

The plurality of pole pieces 26I are annularly disposed along the circumferential direction of second rotating body 30I.

The plurality of pole pieces 26I radially face permanent magnets 34I (described later) of second rotating body 30I.

First rotating shaft 22I functions as an output shaft, and includes main body 221I and support shaft 222I. Support shaft 222I extends from main body 221I toward the axial first side and enters the radially inner side of second rotor 31I (described later).

First rotor 21I is fixed to first rotating shaft 22I. Specifically, an inner peripheral end of bottom 2511 of frame 25I is fixed to main body 221I of first rotating shaft 22I by a bolt. In the configuration described above, first rotor 21I is cantilevered by first rotating shaft 22I. Therefore, for example, first rotating body 20I and second rotating body 30I can be easily assembled.

### (4) Second rotating body

Second rotating body 30I includes second rotor 31I having a tabular shape and disposed on the radially inner side of first rotor 21I.

Second rotor 31 functions as a high-speed rotor and includes rotor core 33I and a plurality of permanent magnets 34I.

Rotor core 33I is a rotor iron core serving as a core of second rotor 311. Rotor core 33I has a cylindrical shape and has internal space 61I.

The plurality of permanent magnets 34I are provided in rotor core 33I. Because second rotor 31I is a surface permanent magnet (SPM) rotor, the plurality of permanent magnets 34I are provided on the outer peripheral side surface of rotor core 33I. Specifically, the plurality of permanent magnets 34I are continuously disposed in the circumferential direction of rotor core 33I so as to cover the entire outer peripheral surface thereof. The plurality of permanent magnets 34I are magnetized to have a magnetic pole direction in the radial direction of second rotor 31I, and is disposed such that N poles and S poles alternately and evenly present along the circumferential direction of rotor core 33I.

Stator 10I, first rotor 21I of first rotating body 20I, and second rotor 31I of second rotating body 30I are disposed in this order from the radially outer side toward the radially inner side. Therefore, there is an air gap between stator 10I and first rotor 21I of first rotating body 20I, and there is an air gap also between first rotor 21I of first rotating body 20I and second rotor 31I of second rotating body 30I.

### (5) Housing

Housing 40I includes a plurality of components. Specifically, housing 40I includes sleeve 41I having a tubular shape, first bracket 42I, and second bracket 43I.

First bracket 42I is disposed so as to close the opening on one side of sleeve 41I. First bracket 42I is provided with third bearing holder 421I for holding third bearing 53I.

Second bracket 43I is disposed so as to close the opening on the other side of sleeve 41I. Second bracket 43I is provided with first bearing holder 431I for holding first bearing 51I.

### (6) Bearing

First rotating body 20I and second rotating body 30I are configured to be able to rotate coaxially and independently of each other.

Second bearing 52I is disposed between support shaft 222I of first rotating shaft 22I and second rotor 31I in internal space 61I of rotor core 33I. Second bearing 52I is of a double bearing type, and includes first small bearing 54I and second small bearing 55I. First small bearing 54I and second small bearing 55I have the same size, and each have a smaller diameter than first bearing 51I and third bearing 53I. First small bearing 54I and second small bearing 55I are disposed apart from each other along the axial direction of support shaft 222I of first rotating shaft 22I.

### (7) Operation

When second rotating body 30I rotates, the magnetic flux generated from second rotating body 30I and the magnetic flux generated from stator 10I act on pole pieces 26I of first rotating body 20I, and as a result, first rotating body 20I is decelerated according to a predetermined gear ratio (reduction ratio) and rotates with high torque.

### (8) Effects

Also in this exemplary embodiment, second bearing 52I is disposed on the radially inner side of second rotor 311. Therefore, a small-diameter bearing can be used as second bearing 52, and cost reduction can be realized.

### (9) Modification of magnetic gear

Note that the configurations of the magnetic-geared motors of the third exemplary embodiment (Fig. 5), the fourth exemplary embodiment (Fig. 6), and the sixth exemplary embodiment (Fig. 8) can also be applied to the magnetic gear.

### (Modifications)

The above-described exemplary embodiments are merely some of various exemplary embodiments of the present disclosure. The above-described exemplary embodiment can be variously changed in accordance with design and the like as long as the object of the present disclosure is achieved. Hereinafter, modifications of the above-described exemplary embodiments will be listed. The modifications described below can be applied in appropriate combination.

In the exemplary embodiments described above, the first rotor is the SPM type, but the present disclosure is not limited thereto. For example, the first rotor may be of an interior permanent magnet (IPM) type as a rotor of the permanent magnet type, in which permanent magnets are embedded in the rotor core. In this case, the rotor may be configured to have a permanent magnet made of a sintered magnet inserted into an insertion hole (embedded hole) provided in a rotor core, or may be configured to have a bonded magnet embedded in an embedded hole provided in a rotor core.

### (Aspects)

The following aspects are disclosed herein.

Magnetic-geared motor (1, 1A to 1H) according to a first aspect includes stator (10, 10A to 10H), first rotating body (20, 20A to 20H), second rotating body (30, 30A to 30H), support shaft (222, 222A to 222E, 222G, 44 F, 44H), and bearing (52, 52 A to 52H). First rotating body (20, 20A to 20H) includes first rotor (21, 21A to 21H) having a tubular shape and rotating shaft (22 to 22H) having axial center (A1) as a rotation center. Second rotating body (30, 30A to 30H) includes second rotor (31, 31A to 31H) disposed between first rotor (21, 21A to 21H) and an axial center of rotating shaft (22 to 22H). Support shaft (222, 222A to 222E, 222G, 44F, 44H) is disposed toward an axial center of rotation shaft (22 to 22H) as viewed from second rotor (31, 31A to 31H). Bearing (52, 52A to 52H) is disposed between support shaft (222, 222A to 222E, 222G, 44F, 44H) and second rotor (31, 31A to 31H).

According to this aspect, because bearing (52, 52A to 52H) is disposed on the radially inner side of second rotor (31, 31A to 31H), a bearing having a small diameter can be used as bearing (52, 52A to 52H), and cost reduction can be realized. Furthermore, by utilizing internal space (61, 61 to 61H) of second rotor (31, 31A to 31H), magnetic-geared motor (1, 1A to 1H) can be downsized in the radial direction.

In magnetic-geared motor (1, 1A, 1D, 1F, 1G, 1H) according to a second aspect, in the first aspect, a plurality of the bearings (52, 52A, 52D, 52F, 52G, 52H) are provided side by side in a direction in which the axial center (A1) extends.

According to this aspect, by configuring bearing (52, 52A, 52D, 52F, 52G, 52H) as a plurality of bearings, high bending rigidity can be secured between rotating shaft (22, 22A, 22D, 22G, 22H) and second rotor (31, 31A, 31D, 31 F, 31G, 31H). Therefore, the number of bearings required between the first rotating shaft and the housing, which has conventionally been two, can be reduced to one, and as a result, the length in the axial direction of the entire of magnetic-geared motor (1, 1A, 1D, 1F, 1G, 1H) can be shortened.

In magnetic-geared motor (1, 1A, 1G) according to a third aspect, in the first or second aspect, support shaft (222, 222A to 222G) is connected to rotating shaft (22, 22A to 22G), support shaft (222, 222A to 222G) rotating integrally with rotating shaft (22, 22A to 22G).

According to this aspect, the configuration is simplified, and first rotating body (20, 20A to 20G) and second rotating body (30, 30A to 30G) can be easily assembled.

In magnetic-geared motor (1, 1A, 1G) according to a fourth aspect, in any one of the first to third aspects, first rotor (21, 21 A, 21G) is cantilevered by rotating shaft (22, 22A, 22G).

According to this aspect, the configuration is simplified, and first rotating body (20, 20A, 20G) and second rotating body (30, 30A, 30G) can be easily assembled.

In a magnetic-geared motor (1, 1B, 1C, 1E) according to a fifth aspect, in any one of the first to fourth aspects, second rotating body (30, 30B, 30C, 30E) further includes second rotating shaft (32, 32B, 32C, 32E) that is coaxial with rotating shaft (22, 22B, 22C, 22E) as the first rotating shaft.

According to this aspect, the rotation speed can be detected easily by using second rotating shaft (32, 32B, 32C, 32E).

In magnetic-geared motor (1B, 1C, 1E) according to a sixth aspect, in any one of the first and third to fifth aspects, bearing (52B, 52C, 52E) is provided singly.

According to this aspect, the number of components can be reduced.

In magnetic-geared motor (1C to 1F) according to a seventh aspect, in any one of the first to third and fifth to sixth aspects, first rotor (21C to 21F) has an axial first end supported by rotating shaft (22C to 22F) and an axial second end rotatably supported by another member other than the rotating shaft.

According to this aspect, because first rotor (21C to 21F) is supported at both ends, the rotation of first rotor (21C to 21F) is stabilized. Therefore, the number of bearings required between the first rotating shaft and the housing, which has conventionally been two, can be reduced to one, and as a result, the length in the axial direction of the entire of magnetic-geared motor (1C to 1F) can be shortened.

Magnetic-geared motor (1F to 1H) according to an eighth aspect further includes, in the first or second aspect, housing (40F to 40H) that covers stator (10F to 10H), first rotating body (20F to 20H), and second rotating body (30F to 30H). Support shaft (44F to 44H) is connected to housing (40F to 40H), support shaft (44F to 44H) rotating integrally with housing (40F to 40H).

According to this aspect, by using a part of housing (40F to 40H) as support shaft (44F to 44H), the structure of rotating shaft (22F to 22H) can be simplified.

In magnetic-geared motor (1, 1A to 1G) according to a ninth aspect, in any one of the first to eighth aspects, stator (10, 10A to 10G), first rotor (21, 21A to 21G), and second rotor (31, 31A to 31G) are disposed while including a direction that passes through an axial center of rotating shaft (22, 22A to 22G) and is perpendicular to the axial center, and stator (10, 10A to 10G), first rotor (21, 21A to 21G), and second rotor (31, 31A to 31G) are aligned in this order from a position away from the axial center toward the axial center of rotating shaft (22, 22A to 22G).

According to this aspect, magnetic-geared motor (1, 1A to 1G) of the inner rotor type can be downsized.

In magnetic-geared motor (1H) according to a tenth aspect, in any one of the first to eighth aspects, first rotor (21H), stator (10H), and second rotor (31H) are disposed while including a direction that passes through axial center (A1) of rotating shaft (22H) and is perpendicular to axial center (A1), and first rotor (21H), stator (10H), and second rotor (31H) are aligned in this order from a position away from axial center (A1) toward axial center (A1).

According to this aspect, magnetic-geared motor (1H) of the outer rotor type can be downsized.

Magnetic gear (3I) according to an eleventh aspect includes stator (10I), first rotating body (20I), second rotating body (30I), support shaft (222I), and bearing (52I). First rotating body (20I) includes first rotor (211) having a tubular shape and rotating shaft (22I) having axial center (A1) as a rotation center. Second rotating body (30I) includes second rotor (31I) disposed between first rotor (21I) and an axial center of rotating shaft (22I). Support shaft (222I) is disposed toward the axial center of rotating shaft (22I) as viewed from second rotor (311). Bearing (52I) is disposed between support shaft (222I) and second rotor (31I).

According to this aspect, because bearing (52I) is disposed on the radially inner side of second rotor (31I), a bearing having a small diameter can be used as bearing (52I), and cost reduction can be realized. Furthermore, by utilizing internal space (61I) of second rotor (311), magnetic gear (3I) can be downsized in the radial direction.

In magnetic gear (3I) according to a twelfth aspect, in the eleventh aspect, bearing (52I) is provided in plural numbers, the bearing being provided side by side in a direction in which the axial center (A1) extends.

According to this aspect, by configuring bearing (52I) as a plurality of bearings, high bending rigidity can be secured between first rotating shaft (22I) and rotor core (33I). Therefore, the number of bearings required between the first rotating shaft and the housing, which has conventionally been two, can be reduced to one, and as a result, the length in the axial direction of the entire of magnetic gear (3I) can be shortened.

In magnetic gear (3I) according to a thirteenth aspect, in the eleventh or twelfth aspect, support shaft (222I) is connected to rotating shaft (22I), support shaft (222I) rotating integrally with rotating shaft (22I).

According to this aspect, the configuration is simplified, and first rotating body (20) and second rotating body (30) can be easily assembled.

In magnetic gear (3I) according to a fourteenth aspect, in the thirteenth aspect, first rotor (21I) is cantilevered by rotating shaft (22I).

According to this aspect, the configuration is simplified, and first rotating body (20I) and second rotating body (30I) can be easily assembled.

### INDUSTRIAL APPLICABILITY

The magnetic-geared motor and the magnetic gear according to the present disclosure can achieve cost reduction. Therefore, the magnetic-geared motor and the magnetic gear according to the present disclosure are industrially useful.

### REFERENCE MARKS IN THE DRAWINGS

1, 1A to 1H: magnetic-geared motor
3I: magnetic gear
10, 10A to 10I: stator
20, 20A to 20I: first rotating body
21, 21A to 21I: first rotor
22, 22A to 22I: first rotating shaft (rotating shaft)
30, 30A to 30I: second rotating body
31, 31A to 311: second rotor
32, 32B, 32C, 32E, 32H, 32I: second rotating shaft
33, 33A to 33I: rotor core
40, 40A to 40I: housing
44F, 44H, 222, 222A to 222E, 222G, 222H, 222I: support shaft
51, 51A to 51I: first bearing (bearing)
52, 52A to 52I: second bearing (bearing)
53, 53A, 53B, 53D, 53F, 53G, 53H, 53I, 531C, 531E: third bearing (bearing)
532C, 532E: fourth bearing
54, 54A, 54D, 54F, 54G, 54H, 54I: first small bearing
55, 55A, 55D, 55F, 55G, 55H, 55I: second small bearing
61, 61A to 611: internal space
A1: axial center

## Claims

1. A magnetic-geared motor comprising:
a stator;
a first rotating body including a first rotor having a tubular shape and a rotating shaft having an axial center as a rotation center;
a second rotating body including a second rotor disposed between the first rotor and the axial center of the rotating shaft;
a support shaft disposed closer to the axial center of the rotating shaft than the second rotor is; and
a bearing disposed between the support shaft and the second rotor.

2. The magnetic-geared motor according to Claim 1, wherein a plurality of the bearings are provided side by side in a direction in which the axial center extends.

3. The magnetic-geared motor according to Claim 1 or 2, wherein the support shaft is connected to the rotating shaft, the support shaft rotating integrally with the rotating shaft.

4. The magnetic-geared motor according to Claim 3, wherein the first rotor is cantilevered by the rotating shaft.

5. The magnetic-geared motor according to Claim 1 or 2, wherein the second rotating body further includes a second rotating shaft that is coaxial with the rotating shaft as a first rotating shaft.

6. The magnetic-geared motor according to Claim 1, wherein the bearing is provided singly.

7. The magnetic-geared motor according to Claim 1 or 2, wherein the first rotor has an axial first end supported by the rotating shaft and an axial second end rotatably supported by another member other than the rotating shaft.

8. The magnetic-geared motor according to Claim 1 or 2, further comprising a housing that covers the stator, the first rotating body, and the second rotating body, wherein
the support shaft is connected to the housing, the support shaft rotating integrally with the housing.

9. The magnetic-geared motor according to Claim 1 or 2, wherein the stator, the first rotor, and the second rotor are disposed while including a direction that passes through the axial center of the rotating shaft and is perpendicular to the axial center, and the stator, the first rotor, and the second rotor are aligned in this order from a position away from the axial center toward the axial center.

10. The magnetic-geared motor according to Claim 1 or 2, wherein the first rotor, the stator, and the second rotor are disposed while including a direction that passes through the axial center of the rotating shaft and is perpendicular to the axial center, and the first rotor, the stator, and the second rotor are aligned in this order from a position away from the axial center toward the axial center.

11. A magnetic gear comprising:
a stator;
a first rotating body including a first rotor having a tubular shape and a rotating shaft having an axial center as a rotation center;
a second rotating body including a second rotor disposed between the first rotor and the axial center of the rotating shaft;
a support shaft disposed toward the axial center of the rotating shaft as viewed from the second rotor; and
a bearing disposed between the support shaft and the second rotor.

12. The magnetic gear according to Claim 11, wherein a plurality of the bearings are provided side by side in a direction in which the axial center extends.

13. The magnetic gear according to Claim 11 or 12, wherein the support shaft is connected to the rotating shaft, the support shaft rotating integrally with the rotating shaft.

14. The magnetic gear according to Claim 13, wherein the first rotor is cantilevered by the rotating shaft.
